Europäisches Patentamt

European Patent Office

Office européen des brevets

(19)

(11) Veröffentlichungsnummer : **0 046 916**
**B1**

## (12) EUROPÄISCHE PATENTSCHRIFT

(45) Veröffentlichungstag der Patentschrift :
16.11.83

(51) Int. Cl.³ : **G 03 B 21/50**

(21) Anmeldenummer : 81106362.7

(22) Anmeldetag : 17.08.81

(54) **Laufbildgerät, vorzugsweise Laufbildprojektor.**

(30) Priorität : 19.08.80 DE 3031305

(43) Veröffentlichungstag der Anmeldung :
10.03.82 Patentblatt 82/10

(45) Bekanntmachung des Hinweises auf die Patenterteilung : 16.11.83 Patentblatt 83/46

(84) Benannte Vertragsstaaten :
**AT FR GB**

(56) Entgegenhaltungen :
**DE A 2 818 910**
**FR A 2 371 701**
**US A 3 851 959**
**US A 4 078 765**
**US A 4 194 817**
**US A 4 198 136**

(73) Patentinhaber : **AGFA-GEVAERT Aktiengesellschaft**
**D-5090 Leverkusen 1 (DE)**

(72) Erfinder : **Rossbach, Horst**
**Bussardstrasse 8**
**D-8031 Eichenau (DE)**

EP 0 046 916 B1

## Laufbildgerät, vorzugsweise Laufbildprojektor

Die Erfindung betrifft ein Laufbildgerät, vorzugsweise Laufbildprojektor, mit einem durch einen elektrischen Antrieb drehbaren Umlaufverschluß, mit einer durch den elektrischen Antrieb gesteuerten Greifervorrichtung für den Filmtransport, wobei die Greifervorrichtung in der Abdeckphase des Bildfensters durch einen Verschlußsektor den Film bildweise weitertransportiert und mit einer auf Markierungen des Films ansprechenden Steuervorrichtung, durch die der Film bildpositionsgerecht arretierbar ist, wobei die Steuervorrichtung einen durch eine UND-Verknüpfung beeinflußbaren Elektromagneten aufweist, durch dessen Anker die Greifervorrichtung am Ende einer Bildtransportphase unwirksam schaltbar ist, wobei ein erster Steuereingang der UND-Verknüpfung mit einem während der Abdeckphase des Bildfensters durch den Verschlußsektor ein Verschlußpositionssignal erzeugenden Positions-Signalgeber verbunden ist und wobei ein zweiter Steuereingang der UND-Verknüpfung mit einem während der Positionssignalphase ein Markierungssignal erzeugenden Markierungsabtast-Signalgeber verbunden ist.

Der Erfindung liegt die Aufgabe zugrunde, ein Laufbildgerät der eingangs genannten Art, das aus der US-PS 3 851 959 bekannt ist, zu schaffen, welches in einfacher Weise und ohne großen Aufwand ein positionsgerechtes Anhalten des Films störungsfrei ermöglicht, wobei das Anhalten des Filmes nur aufgrund der Filmmarkierungen während des Vorwärtslaufs erfolgen soll, während die Filmmarkierungen bei Rückwärtslauf keine Steuerungswirkung ausüben sollen.

Erfindungsgemäß wird dies dadurch erreicht, daß die UND-Verknüpfungsstufe eingangsseitig über einen bei Vorwärtslauf geschlossenen und bei Rückwärtslauf geöffneten Schalter mit Durchsteuerpotential verbunden ist und daß der UND-Verknüpfungsstufe eine getaktete Speicherstufe nachgeschaltet ist, deren Rücksetzeingang an eine Rücksetztaste angeschlossen ist.

Dadurch, daß die UND-Verknüpfungsstufe eingangsseitig über einen bei Vorwärtslauf geschlossenen und bei Rückwärtslauf geöffneten Schalter mit Durchsteuerpotential verbunden ist, ergibt sich der Vorteil, daß die UND-Verknüpfungsstufe nur dann durchgesteuert wird, wenn der Film auf Vorwärtslauf geschaltet ist. Bei Rückwärtslauf lösen Filmbildmarkierungen keine Steuerwirkung aus. Die Vorrichtung ist daher störunanfälliger als die bekannte Vorrichtung, da bei Rückwärtslauf die UND-Verknüpfungsstufe gesperrt ist.

Dadurch, daß der UND-Verknüpfungsstufe eine getaktete Speicherstufe nachgeschaltet ist, deren Rücksetzeingang an eine Rücksetztaste angeschlossen ist, ergibt sich der Vorteil, daß beim Auftreten eines Steuersignals am Ausgang der UND-Verknüpfungsstufe dieses Signal in die Speicherstufe eingegeben wird und so lange gespeichert wird, bis dem Rücksetzeingang beim Betätigen der Rücksetztaste ein Rückstellimpuls zugeführt wird.

Gemäß weiterer Ausbildung weist der Positionssignalgeber eine Lichtquelle, mindestens einen auf einem Sektor des Umlaufverschlusses vorgesehenen Umlenkspiegel sowie einen lichtelektrischen Wandler auf, wobei der Umlenkspiegel im Bereich der Mittellinie eines Umlaufverschlußsektors vorgesehen ist.

Gemäß weiterer Ausbildung weist der Markierungs-Abtastsignalgeber eine Lichtquelle, vorzugsweise eine Leuchtdiode, einen lichtelektrischen Wandler sowie ein diesem nachgeschaltetes Differenzierglied auf, wobei der Markierungs-Abtastsignalgeber um eine vorgegebene Anzahl von Bildbreiten gegenüber der Bildfenstermitte versetzt angeordnet ist. Hierbei ist die Markierung in vorteilhafter Weise im Bereich der Mitte einer Bildbreite randseitig angeordnet.

In vorteilhafter Weise ist zwischen der Leuchtdiode und dem Film ein Lichtleiter vorgesehen.

Gemäß weiterer Ausgestaltung ist mittels des Magneten ein Ankerhebel parallel zur Filmtransportrichtung bewegbar, wobei bei angezogenem Ankerhebel ein an ihm vorgesehener Ansatz den Greiferhebel untergreift und ein Eintauchen des Greiferstiftes in die Filmperforation unterbindet, wobei der Greiferhebel mit dem Antrieb wirksam verbunden bleibt.

Gemäß weiterer Ausbildung sind zwei Umlenkspiegel vorgesehen, von denen der zweite Spiegel auf einem Bund des Umlaufverschlusses angeordnet ist und das Licht parallel zur Drehachse umlenkt.

Im folgenden wird die Erfindung anhand eines in den Figuren 1 bis 4 dargestellten Ausführungsbeispieles beschrieben. Es zeigen :

Figuren 1, 1a eine schematische Darstellung einer Filmtransport- und Arretiervorrichtung,

Figur 2 ein mit einer Bildmarkierung versehener Film und

Figuren 3 und 4 die zeitliche Zuordnung der Greifer betätigung und der Signalerzeugung.

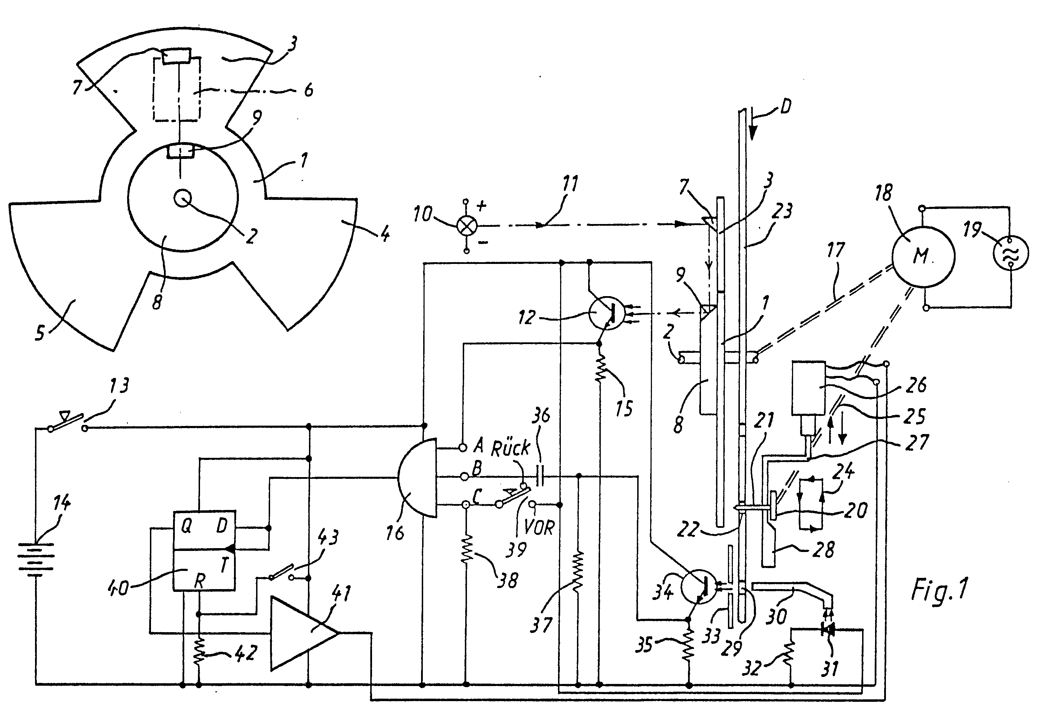

Gemäß Fig. 1a ist mit 1 ein Umlaufverschluß bezeichnet, der um eine Achse 2 drehbar ist. Der Umlaufverschluß 1 weist drei um 120° versetzte Sektoren 3, 4 und 5 auf. Hinter dem Verschlußsektor 3 befindet sich in der dargestellten Stellung des Umlaufverschlusses ein Bildfenster 6. Ein auf dem Umlaufsektor 3 befindlicher Umlenkspiegel ist mit 7 bezeichnet. Der Umlaufverschluß 1 ist mit einem Bund 8 vorgesehen, welcher eine als Umlenkspiegel ausgebildete Schräge aufweist. Mit 10 ist eine Lampe bezeichnet, deren Strahlen 11 über die Spiegel 7 und 9 einem Fototransistor 12 zugeführt werden. Der Fototransistor 12 ist mit seinem Kollektor über einen Schalter 13 mit einer Batterie 14 verbindbar. Ein Emitterwiderstand des Fototransistors 12 ist mit 15 bezeichnet.

Vom Emitter des Fototransistors 12 führt eine Verbindung zu einem ersten Eingang A eines UND-Gatters 16.

Der Umlaufverschluß 1 ist über eine getriebliche Verbindung 17 mit einem Elektromotor 18 verbunden, der durch eine Wechselspannungsquelle 19 versorgt wird.

Mit 20 ist ein Greiferhebel bezeichnet, an dem ein Greiferstift 21 vorgesehen ist, welcher in die Perforation 22 eines in Pfeilrichtung D zu transportierenden Films 23 eingreift. Der Greiferhebel 20 mit Stift 21 führt eine zyklische Bewegung 24 aus.

In nicht näher dargestellter Weise ist der Greiferhebel 20 über eine Steuerkurven aufweisende Nockenvorrichtung 25 mit dem Antriebsmotor 18 verbunden.

Ein Tauchmagnet 26 weist einen Anker 27 auf, der parallel zur Filmtransportrichtung D bewegbar ist. Der Anker 27 ist mit einem Ansatz 28 versehen. Im abgefallenen Zustand des Ankers 27 befindet sich der Ansatz 28 außerhalb des Bewegungsbereichs des Greiferhebels 20. Bei angezogenem Anker des Magneten 26 ist der Ansatz 28 in dem Bewegungsbereich des Greiferhebels 20 bewegt, so daß der Greiferhebel 20 bzw. sein Greiferstift 21 nicht in die Perforation 22 des Films 23 eintauchen kann.

Der Film 23 weist eine Markierung 29 auf, die sich gemäß Fig. 1 vor dem Ende eines Lichtleitstabes 30 befindet. Vor dem anderen Ende des Lichtleitstabes 30 ist eine Leuchtdiode 31 vorgesehen, die in Reihe mit einem Widerstand 32 geschaltet ist.

Eine Lochblende ist mit 33 bezeichnet, vor der sich ein zweiter Fototransistor 34 befindet. Der Kollektor des zweiten Fototransistors 34 ist ebenfalls über den Schalter 13 mit dem Pluspol der Batterie 14 verbindbar. Ein Emitterwiderstand ist mit 35 bezeichnet. Vom Emitter des Fototransistors 34 führt eine Verbindung zu einem Differenzierkondensator 36, dem ein Differenzierwiderstand 37 zugeordnet ist. Vom Differenzierkondensator 36 führt eine Verbindung zu einem zweiten Eingang B des UND-Gatters 16.

Ein dritter Eingang C des UND-Gatters 16 ist einerseits mit einem Widerstand 38 und andererseits mit einem Schalter 39 verbunden, welcher bei Vorwärtslauf des Films 23 geschlossen und bei Rückwärtslauf geöffnet ist. Im geschlossenen Zustand des Schalters 39 ist der Eingang C des UND-Gatters 16 mit Pluspotential der Batterie 16 verbindbar.

Dem UND-Gatter 16 ist eine getaktete Speicherstufe 40 nachgeschaltet, die als D-Flip-Flop ausgebildet ist. Die Ausgang des UND-Gatters 16 ist sowohl mit dem Takteingang T als auch mit dem Steuereingang D des Speicher-Flip-Flops 40 verbunden. Vom Ausgang Q des Flip-Flops 40 führt eine Verbindung zu einem Verstärker 41, dessen Ausgang mit dem Magnet 26 verbunden ist. Vom Rücksetzeingang R des D-Flip-Flops führt eine Verbindung zu einem Ableitwiderstand 42 und über einen Rücksetzschalter 43 zum Pluspol der Batterie 14.

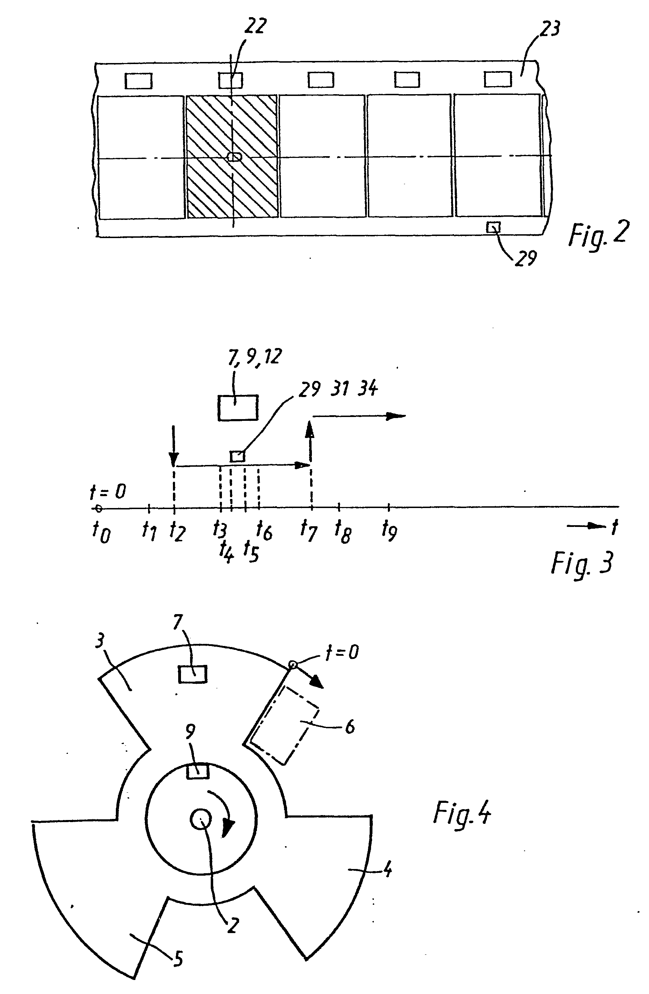

In den Figuren 2 bis 4 sind die den Teilen gemäß Fig. 1 und 1a entsprechenden Teile mit gleichen Bezugszeichen versehen.

Gemäß Fig. 1a befindet sich das Bildfenster 6 genau in der Mitte des Sektorflügels 3. Da der Spiegel 7 im Bereich der Mittellinie des Sektorflügels 3 angeordnet ist, gelangt in dieser Position Licht von der Lichtquelle 10 über die Spiegel 7 und 9 zu den Fototransistoren 9 und 12, wodurch dieser leitend wird. Folglich liegt am Eingang A des UND-Gatters 16 Pluspotential an. Des weiteren gelangt beim Vorbeibewegen der Lichtmarke 29 an der Öffnung 33 ein Lichtsignal von der Leuchtdiode 31 zum Fototransistor 34. Dieser Lichtimpuls wird über das Differenzierglied 36, 37 auf den zweiten Eingang des UND-Gatters 16 übertragen. Das Differenzierglied 36, 37 bewirkt, daß nur die positive Anstiegsflanke des Lichtimpulses wirksam wird.

Da der Film in Vorwärtstransportrichtung D bewegt wird, ist der Schalter 39 geschlossen, so daß am Eingang C des UND-Gatters 16 Pluspotential anliegt.

Mit der positiven Impulsflanke des Lichtimpulses wird einerseits Pluspotential im Takteingang T und andererseits dem Steuereingang D des D-Flip-Flops 40 zugeleitet und zum Ausgang Q geschoben. Dieses Potential wird im Verstärker 41 verstärkt und dem Magnet 26 zugeführt, dessen Anker 27 aufgrund der Trägheit des Magneten 26 mit einer gewissen Zeitverzögerung angezogen wird. Die Zeitverzögerung ist so, daß das gerade in der Mitte der Transportphase befindliche Bild noch seine restliche Bewegungsphase ausführen kann. Erst wenn der Greiferstift 21 ohnehin ausgehoben wird, untergreift der Ansatz 28 den Greiferhebel 20 und bewirkt, daß der Film positionsgerecht angehalten wird, obwohl der Greifer eingeschaltet bleibt.

Erst wenn die Rücksetztaste 43 betätigt wird, erfolgt eine Zurücksetzung des D-Flip-Flops 40 und damit eine Aberregung des Magneten 26. Nach Abschaltung des Magneten 26 wird der Anker 24 mittels einer nicht dargestellten Feder in die gezeigte Stellung überführt und damit der Greiferhebel 20 freigegeben.

In Fig. 2 ist der Film 23 mit der Perforation 22 und der Lichtmarkierung 29 dargestellt.

Anhand der Figuren 3 und 4 ist die zeitliche Zuordnung der während der Abdeckphase des Bildfensters 6 erfolgenden Vorgänge ersichtlich. Im Zeitpunkt t0 beginnt die Abdeckung des Bildfensters 6. Im Zeitpunkt t1 ist das Bildfenster 6 gerade abgedeckt. Im Zeitpunkt t2 erfolgt das Eintauchen des Greiferstiftes 21 des Greiferhebels 20 in die Filmperforation 22. Es beginnt nun die Bildtransportphase, die im Zeitpunkt t7 beendet ist. Im Zeitpunkt t7 gibt der Greiferstift 21 die Filmperforation 22 frei. Es erfolgt die Rückbewegung des Greiferstiftes. Im Zeitpunkt t8 beginnt die Freigabe des Bildfensters 6 durch die rückwärtige Kante des Verschlußsektors 3. Im Zeitpunkt t9 ist das Bildfenster 6 freigegeben. Während der Abdeckphase des Bildfensters 6 erfolgt im Zeitpunkt t3 die Beeinflussung des Fototransistors 12 durch die Lichtstrahlen 11 der Lichtquelle 10 über die Umlenkspiegel 7 und 9. Die Beeinflussung des Fototransistors 12 ist im Zeitpunkt t6 beendet. Innerhalb der Beeinflussungszeit des Fototransistors 12 erfolgt die Lichtbeeinflussung des Fototransistors 34 durch die Filmmarkierung 29. Sie beginnt im Zeitpunkt t4 und endet im Zeitpunkt t5. Nur in der Überlappungszeit der Beeinflussung der beiden Fototransistoren 12 und 34 kann das UND-Gatter 16 durchgesteuert werden.

## Ansprüche

1. Laufbildgerät, vorzugsweise Laufbildprojektor, mit einem durch einen elektrischen Antrieb drehbaren Umlaufverschluß, mit einer durch den elektrischen Antrieb gesteuerten Greifervorrichtung für den Filmtransport, wobei die Greifervorrichtung in der Abdeckphase des Bildfensters durch einen Verschlußsektor den Film bildweise weitertransportiert und mit einer auf Markierungen des Films ansprechenden Steuervorrichtung, durch die der Film bildpositionsgerecht arretierbar ist, wobei die Steuervorrichtung einen durch eine UND-Verknüpfung beeinflußbaren Elektromagneten aufweist, durch dessen Anker die Greifervorrichtung am Ende einer Bildtransportphase unwirksam schaltbar ist, wobei ein erster Steuereingang der UND-Verknüpfung mit einem während der Abdeckphase des Bildfensters durch den Verschlußsektor ein Verschlußpositionssignal erzeugenden Positions-Signalgeber verbunden ist und wobei ein zweiter Steuereingang der UND-Verknüpfung mit einem während der Positionssignalphase ein Markierungssignal erzeugenden Markierungsabtast-Signalgeber verbunden ist, dadurch gekennzeichnet, daß die UND-Verknüpfungsstufe (16) eingangsseitig über einen bei Vorwärtslauf geschlossenen und bei Rückwärtslauf geöffneten Schalter (39) mit Durchsteuerpotential verbunden ist und daß der UND-Verknüpfungsstufe eine getaktete Speicherstufe (40) nachgeschaltet ist, deren Rücksetzeingang (R) an eine Rücksetztaste (43) angeschlossen ist.

2. Laufbildgerät nach Anspruch 1, dadurch gekennzeichnet, daß der Positions-Signalgeber eine Lichtquelle (10), mindestens einem auf einem Sektor (3) des Umlaufverschlusses (1) vorgesehenen Umlenkspiegel (7) sowie einen lichtelektrischen Wandler (12) aufweist und daß der Umlenkspiegel im Bereich der Mittellinie eines Umlaufverschlußsektors (3) angeordnet ist.

3. Laufbildgerät nach Anspruch 1 oder 2, dadurch gekennzeichnet, daß der Markierungsabtast-Signalgeber eine Lichtquelle, vorzugsweise eine Leuchtdiode (31), einen lichtelektrischen Wandler (34) sowie ein diesem nachgeschaltetes Differenzierglied (36, 37) aufweist und daß der Abtastsignalgeber um eine vorgegebene Anzahl von Bildbreiten (z. B. 3 gegenüber der Bildfenstermitte versetzt angeordnet ist.

4. Laufbildgerät nach einem der vorhergehenden Ansprüche, dadurch gekennzeichnet, daß die Markierung (29) im Bereich der Mitte einer Bildbreite randseitig angeordnet ist.

5. Laufbildgerät nach Anspruch 3, dadurch gekennzeichnet, daß zwischen Leuchtdiode (31) und Film (23) ein Lichtleiter (30) angeordnet ist.

6. Laufbildgerät nach einem der vorhergehenden Ansprüche, dadurch gekennzeichnet, daß mittels des Magneten (26) ein Ankerhebel (27) parallel zur Filmtransportrichtung (D) bewegbar ist und daß bei angezogenem Ankerhebel ein an ihm vorgesehener Ansatz (28) den Greiferhebel (20) untergreift und ein Eintauchen des Greiferstiftes (21) in die Filmperforation (22) unterbindet, wobei der Greiferantrieb eingeschaltet bleibt.

7. Laufbildgerät nach einem der vorhergehenden Ansprüche, dadurch gekennzeichnet, daß zwei Umlenkspiegel vorgesehen sind, von denen der zweite Spiegel (9) auf einem Bund (8) des Umlaufverschlusses (1) angeordnet ist und das Licht parallel zur Drehachse (2) umlenkt.

## Claims

1. Moving picture apparatus, in particular a moving picture projector, having a rotary shutter which may be rotated by means of an electrical drive, a gripping device for transporting the film and controlled by the electrical drive, the gripping device transporting the film picture by picture in the phase in which the film gate is covered by a shutter sector, and a control device which responds to markings on the film and by means of which the film may be stopped such that the picture is in the correct position, the control device comprising an electromagnet which can be influenced by an AND logic operation and by means of whose armature the gripping device may be disabled at the end of a picture transporting phase, a first control input of the AND logic operation being connected to a position signal transmitter which generates a shutter position signal during the phase in which the film gate is covered by the shutter sector, and a second control input of the AND logic operation being connected to a marking scanning signal transmitter which generates a marking signal during the position signal phase, characterized in that the AND logic operation stage (16) is connected on the input side to a control potential *via* a switch (39) which is closed during forward movement and open during backward movement, and in that there is connected downstream of the AND logic operation stage a clocked storage stage (40), the reset input (R) of which is connected to a reset key (43).

2. Moving picture apparatus as claimed in claim 1, characterized in that the position signal transmitter comprises a light source (10), at least one surface mirror (7) provided on one sector (3) of the rotary shutter (1), and a photoelectric converter (12), and in that the surface mirror is arranged in the region of the centre line of the said one of the rotary shutter sectors (3).

3. Moving picture apparatus as claimed in claim 1 or 2, characterized in that the marking scanning signal transmitter comprises a light source, preferably a light-emitting diode (31), a photoelectric converter (34) and a differential element (36, 37) connected downstream of the latter, and in that the scanning signal transmitter is offset by a predetermined number of picture widths (e. g. 3) with respect to the centre of the film gate.

4. Moving picture apparatus as claimed in one of the preceding claims, characterized in that the marking (29) is arranged at an edge and in the region of the centre of a picture width.

5. Moving picture apparatus as claimed in claim 3, characterized in that a light guide (30) is arranged between the light-emitting diode and the film (23).

6. Moving picture apparatus as claimed in one of the preceding claims, characterized in that an armature lever (27) may be moved parallel to the direction of film transport (D) by means of the magnet (26), and in that when the armature lever is pulled up an attachment (28) provided thereon engages below the gripper lever (20) and prevents the gripper pin (21) from entering the film perforation (22), whereby the gripper drive remains switched on.

7. Moving picture apparatus as claimed in one of the preceding claims, characterized in that two surface mirrors are provided, of which the second mirror (9) is arranged on a collar (8) of the rotary shutter (1) and deflects the light parallel to the rotation axis (2).

**Revendications**

1. Dispositif d'entraînement de film, de préférence projecteur, comportant un obturateur rotatif qui peut être entraîné en rotation par un entraînement électrique, un dispositif d'avancement à griffe commandé par l'entraînement électrique pour le transport du film, le dispositif d'avancement à griffe faisant avancer le film image par image dans la phase de recouvrement de la fenêtre de cadrage par un secteur de l'obturateur, et un dispositif de commande répondant à des repères du film et par l'intermédiaire duquel le film peut être bloqué en conformité à la position de l'image, le dispositif de commande comportant un électroaimant qui peut être commandé par un élément logique ET et par le noyau plongeur duquel le dispositif d'avancement à griffe peut être rendu inefficace à la fin d'une phase de transport du film, une première entrée de commande de l'élément logique ET étant reliée à un générateur de signaux de position qui produit un signal de position de l'obturateur pendant la phase de recouvrement de la fenêtre de cadrage par le secteur de l'obturateur, et une seconde entrée de commande de l'élément logique ET étant reliée à un générateur de signaux de lecture des repères qui produit un signal de repère pendant la phase des signaux de position, caractérisé par le fait que l'élément logique ET (16) est relié, côté entrée, à un potentiel de mise dans l'état passant par l'intermédiaire d'un commutateur (39) fermé lors de la marche avant et ouvert lors de la marche arrière, et qu'en aval de l'élément logique ET est monté un étage de mémoire cadencé (40) dont l'entrée de remise dans l'état initial (R) est raccordée à une touche de remise dans l'état initial (43).

2. Dispositif d'entraînement de film suivant la revendication 1, caractérisé par le fait que le générateur de signaux de position comporte une source lumineuse (10), au moins un miroir de déviation (7) prévu sur un secteur (3) de l'obturateur rotatif (1), ainsi qu'un capteur photoélectrique (12), et que le miroir de déviation est disposé dans la région de la ligne centrale d'un secteur (3) de l'obturateur rotatif.

3. Dispositif d'entraînement de film suivant la revendication 1 ou 2, caractérisé par le fait que le générateur de signaux de lecture des repères comporte une source lumineuse, de préférence une diode électroluminescente (31), un capteur photoélectrique (34), ainsi qu'un élément de différentiation (36, 37) monté en aval de celui-ci, et que le générateur de signaux de lecture est disposé en étant décalé d'un nombre prédéterminé de largeurs d'image (par exemple 3) par rapport au milieu de la fenêtre de cadrage.

4. Dispositif d'entraînement de film suivant l'une des revendications précédentes, caractérisé par le fait que le repère (29) est disposé sur le bord dans la région du milieu d'une largeur d'image.

5. Dispositif d'entraînement de film suivant la revendication 3, caractérisé par le fait qu'un guide de lumière (30) est disposé entre la diode électroluminescente (31) et le film (23).

6. Dispositif d'entraînement de film suivant l'une des revendications précédentes, caractérisé par le fait qu'un levier (27) du noyau plongeur peut être déplacé, au moyen de l'aimant (26), parallèlement à la direction de transport (D) du film, et que lorsque le levier du noyau plongeur est attiré un appendice (28) prévu sur celui-ci passe sous le levier à griffe (20) et empêche un engagement de la broche formant griffe (21) dans la perforation (22) du film, l'entraînement à griffe restant en circuit.

7. Dispositif d'entraînement de film suivant l'une des revendications précédentes, caractérisé par le fait qu'il est prévu deux miroirs de déviation dont le second miroir (9) est disposé sur un épaulement (8) de l'obturateur rotatif (1) et dévie la lumière parallèlement à l'axe de rotation (2).

Fig.1

Fig. 2

Fig. 3

Fig. 4

2